# EUROPEAN PATENT APPLICATION

(11) **EP 3 734 094 A1**
(43) Date of publication of application: **04.11.2020**
(21) Application number: 20166403.4
(22) Date of filing: 27.03.2020
(51) Int. Cl.: F16C 25/08, F16C 27/06, F16C 19/52, F16C 27/04

(54) **A SHAFT CATCHER SYSTEM**

(30) Priority: 18.04.2019 GB 201905527
(71) Applicant: Rolls-Royce plc, London N1 9FX (GB)
(72) Inventor: Thornton, Stewart, Derby, Derbyshire DE24 8BJ (GB); Chilton, Nicholas, Derby, Derbyshire DE24 8BJ (GB); Hicks, Robert, Derby, Derbyshire DE24 8BJ (GB)
(74) Representative: Rolls-Royce plc

(57) **Abstract**

A shaft catcher system for a thrust shaft is disclosed. A bearing has a first part mounted to a shaft assembly of a thrust shaft and a second part. The first part is arranged to rotate with the shaft assembly about an axis of rotation relative to the second part. An annular biasing member is disposed about the axis of rotation and arranged to apply an axial pre-load to the shaft assembly via the bearing during normal use. The annular biasing member is mounted to a static support structure (80) and arranged to limit axial movement of the shaft assembly during a shaft assembly failure state.

## Description

### BACKGROUND OF THE DISCLOSURE

The present disclosure relates to a catcher system for a rotating shaft, and more specifically, although not exclusively, to a catcher bearing for a gas turbine engine.

In turbofan gas turbine engines, bearings provide a means of accurately locating rotors while transmitting high forces with very little rotational resistance. Gas turbine engines tend to use rolling element bearings such as ball bearings and roller bearings for mounting all rotating shafts. Ball bearings use balls as the rolling elements, which, because of their shape, can withstand both radial and axial forces, making them suitable for transmitting thrust from the rotors to the engine casing. Roller bearings use cylinders as the rolling elements, allowing them to transmit radial load across their diameters whilst allowing the shaft to slide lengthwise.

Using a single ball bearing for thrust and one or more roller bearings to support a rotor allows positioning at the ball bearing, but freedom for growth at the roller bearings. Hence, the ball bearing provides axial location, whilst the roller bearings support pure radial load and allow for axial shaft elongation due to temperature changes with no additional load effect on the bearing.

Unlike a conventional turbofan engine, the fan system on a geared turbofan engine is not typically axially linked to the turbine. Hence, the fan location bearing is only subjected to fan loads plus any secondary air system effects.

In certain combinations of engine size and operating conditions, it can therefore arise that there is little to no axial load acting on the fan location bearing, which can lead to the bearing elements skidding, causing significant heat generation and, eventually/potentially, bearing failure.

On the flipside, once a bearing has failed, a thrust load applied by the fan system naturally pulls the shaft and any other assembly associated with the fan system forwards. The axial location of the whole assembly, including the fan itself, may therefore be lost, with potentially hazardous results.

Whilst it is a possibility to provide a thrust shaft to connect the fan system to the location bearing that is independent of the torque path, the failure of that torque path would result in the axial location of the fan being lost.

It is an aim of the present disclosure to mitigate one or more of the abovementioned problems.

### BRIEF SUMMARY OF THE DISCLOSURE

According to a first aspect of the disclosure there is provided a shaft catcher system for a thrust shaft comprising: a bearing comprising a first part arranged to be mounted to a shaft assembly of a thrust shaft in use and a second part, wherein the first part is arranged to rotate with the shaft assembly about an axis of rotation relative to the second part; an annular biasing member disposed about the axis of rotation and arranged to apply an axial pre-load to the shaft assembly via the bearing during normal use, wherein the annular biasing member is mounted to a static support structure and arranged to limit axial movement of the shaft assembly during a shaft assembly failure state.

According to a further aspect of the disclosure, there is provided a gas turbine engine comprising the shaft catcher system of the first aspect.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform. The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.
The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of descent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C. As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is an exploded perspective view of a catcher bearing as described herein;
Figure 5 is a sectional side view through the catcher bearing of Figure 4 when installed in a gas turbine engine;
Figure 6 is a cross section through a portion of the catcher bearing of Figure 5; and
Figure 7 is a sectional side view through the catcher bearing of Figure 5 incorporating a shock absorber.

### DETAILED DESCRIPTION

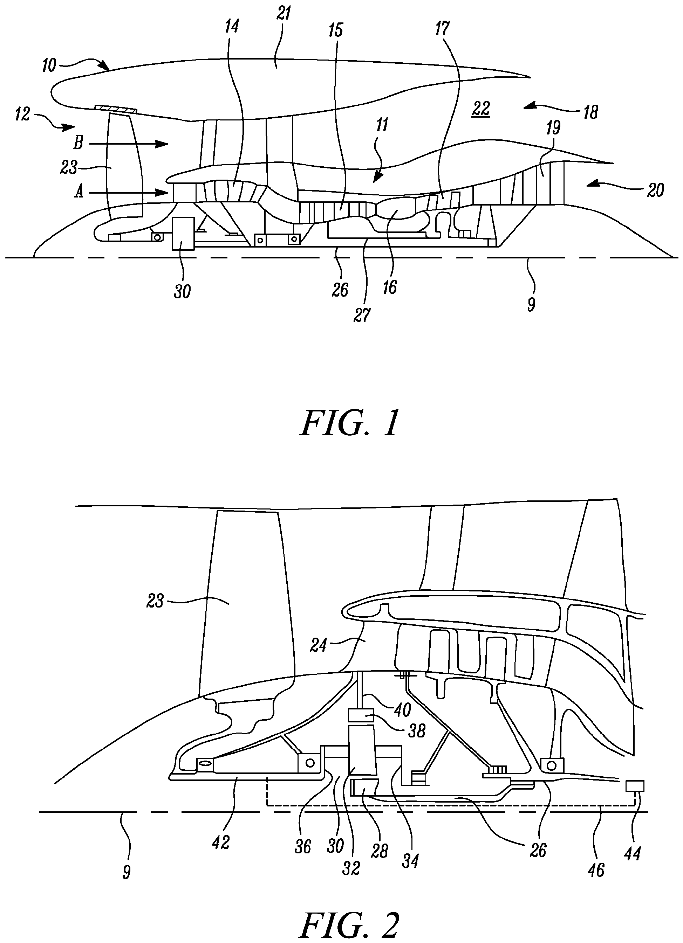

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to a fan shaft 42 of the fan 23 in order to drive its rotation about the engine axis 9. Radially outwardly of the planet gears 32 and intermeshing therewith is an annulus or ring gear 38 that is coupled, via linkages 40, to a stationary supporting structure 24.

The axial position of the fan 23 and fan shaft 42 is maintained by a fan location bearing 44, shown schematically in Figure 2. The location bearing 44 may be an intershaft location bearing and is typically a ball bearing arrangement. The location bearing 44 may be located differently in different engine configurations. In some engine configurations, a thrust shaft 46 may bypass the gearbox 30 and provide an axial link between the fan shaft/spool 24 and the location bearing 44. This thrust shaft 46 (indicated as a dashed line in Figure 2) may thus be independent of the torque path through the gearbox 30. However the term 'thrust shaft' as otherwise used herein refers more generally to any shaft that bears the thrust generated by the engine, e.g. in tension, including fan shaft 42.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

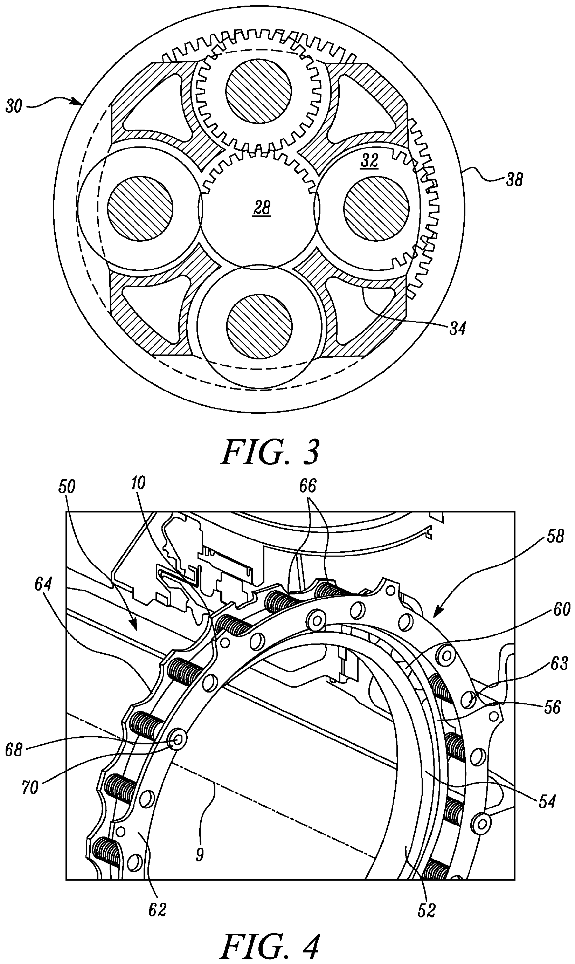

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations. Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

In use it will be appreciated that when the fan 23 is driven so as to provide propulsive thrust, significant axial load is created in the shaft 42, i.e. in tension. However when the fan is idling or windmilling, e.g. during descent, then the axial load may be lessened, negated or applied in an opposing sense, i.e. in compression.

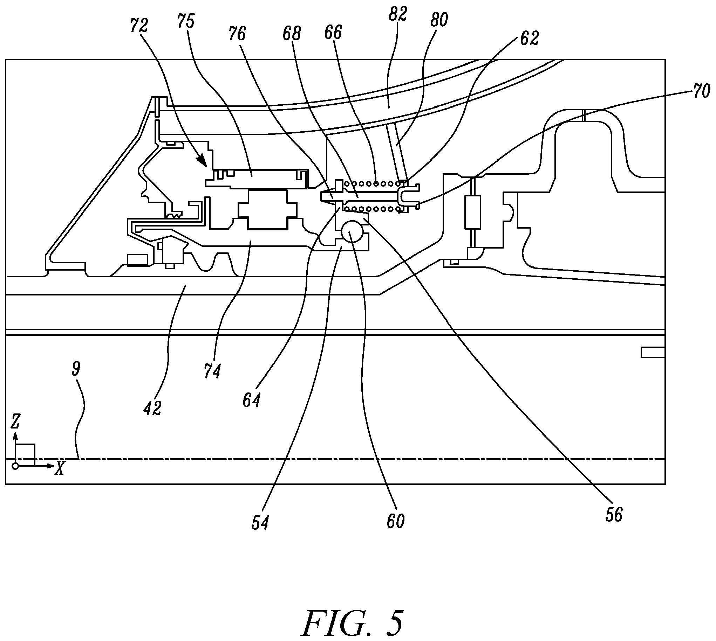

Figures 4 and 5 illustrate a catcher bearing system 50 according to the present disclosure. Figure 5 illustrates a cross-section through a portion of the catcher bearing mounted in a gas turbine engine 10, i.e. a longitudinal direction for the engine 10 as a whole comprising the axis 9.

The catcher bearing 50 system comprises a pre-load bearing 52 having an inner race 54, an outer race 56, and rolling/bearing elements 60, e.g. in the form of balls, disposed between the inner and outer races. Although not visible in Figure 4, the skilled person will understand that the bearing 52 will typically comprise a cage for the bearing elements 60.

Attached to the outer race 56 of the pre-load bearing is a biasing member 58, which takes the form of a spring-packed structure comprising a first retaining plate 62, a second retaining plate 64 and a plurality of biasing elements in the form of springs 66 compressed therebetween.

The biasing member 58 and/or retaining plates 62, 64 are annular in form so as to surround the fan shaft 42 and follow the annular profile of the outer bearing race 56.

The retaining plates 62, 64 are held together by a plurality of alignment members or spacers 68, which may take the form of guide pins. A circumferential array of the alignment members 68 are disposed around the annular retaining plates. The members 68 may limit the maximum and/or minimum axial spacing between the plates in different examples of the disclosure.

Each of the inner and outer races 54, 56 is a circular ring, the outer race 56 being of a greater diameter than the inner race 54, such that the races are concentrically arranged relative to the axis of rotation 9 of the shaft 42.

One or both of the inner and outer races 54, 56 has a channel formed therein for the bearing elements 60 which sit between the inner and outer races. A cage is used to maintain the spacing between each of the bearing elements 60, which are held within correspondingly-shaped pockets formed in the cage. In this example, the bearing elements 60 are spherical balls, and the pockets defined in the cage are therefore spherically shaped.

The second retaining plate 64 is attached to the outer race 56 such that the second retaining plate 64 forms a concentric ring about the circumference of the outer race 56. The spring-packed biasing structure extends from the second retaining plate 64 to the first retaining plate 62 which is positioned axially offset from the ball bearing 52.

The retaining plates 62, 64 comprise a pair of spaced apart rings of equal inner and outer diameters. The inner diameter is slightly greater than the outer diameter of the outer race 56 of the pre-load bearing 52, such that the second retaining plate 64 can be attached to the outer circumference of the outer race 56, e.g. by a flange.

Each retaining plate 62, 64 comprises a series of apertures 63 around its circumference. A circumferential array of springs 66 are placed between the two retaining plates 62, 64, e.g. at even angular spacing around the inner circumferences of the two retaining plates 62, 64, at positions corresponding to those apertures 63.

These springs 66 have an at-rest length, i.e. an undeformed condition, but can be extended/compressed to vary the space between the retaining plates 62, 64. The resilience of the springs is tailored to suit the loading requirements of the system in use.

In order to hold the retaining plates 62, 64 together, the alignment members 68 are placed through the apertures 63 in the first retaining plate 62, through the inside of the coiled springs 66 and through the corresponding apertures in the second retaining plate 64.

The alignment members 68 comprise an end stop 70 which takes the form of an abutment surface having a larger diameter than that of the aperture 63. The end stop 70 will abut the outer surface of the first retaining plate 62 when the plates 62, 64 are pulled apart by a distance equal to the length of the alignment members 68.

The alignment members 68 can thus slide through the apertures 63 to the extent limited by the end stop 70.

The alignment members 68 are rigidly affixed to the plate 65 as best shown in Figure 5, e.g. by way of a nut-and-bolt engagement 76, or other using a different conventional fastener of fixing.

The alignment members 68 may be of a length substantially equal to the undeformed length of the springs 66. Alternatively, the members 68 may be shorter (so as to apply a resilient bias against the inner surface of the retaining plates 62, 64), or longer (so that the springs 66 are in extension before the end stop 70 limits separation of the plates).

The first retaining plate 62 is arranged to be mounted to a static support structure 82 of the engine, e.g. a portion of the engine casing, as shown in Figure 5. The support structure 82 depends from the support 24 spanning the core flow passage intake as shown in Figure 2. The first retaining plate 62 comprises formations, e.g. tabs, for connection to a supporting member or arm 80 depending from the casing 82, i.e. to hold the catcher bearing 50 radially inwardly of the casing. The tabs project outwardly from the curvature of the first retaining plate 62 and comprise an aperture for insertion of a suitable fastener.

It can be seen in Figure 5 that, when the catcher bearing 50 is mounted in situ, the alignment members 68 protrude beyond the rear plate 62, i.e. through the apertures 33 therein. Thus, the axial spacing between the plates 62 and 64 is less than the maximum limit.

The springs 66 are held in compression between the plates by virtue of the axial spacing between the rigid support member(s) 80 and the front plate 64. That is to say, the springs 66 are compressed upon assembly in the engine 10.

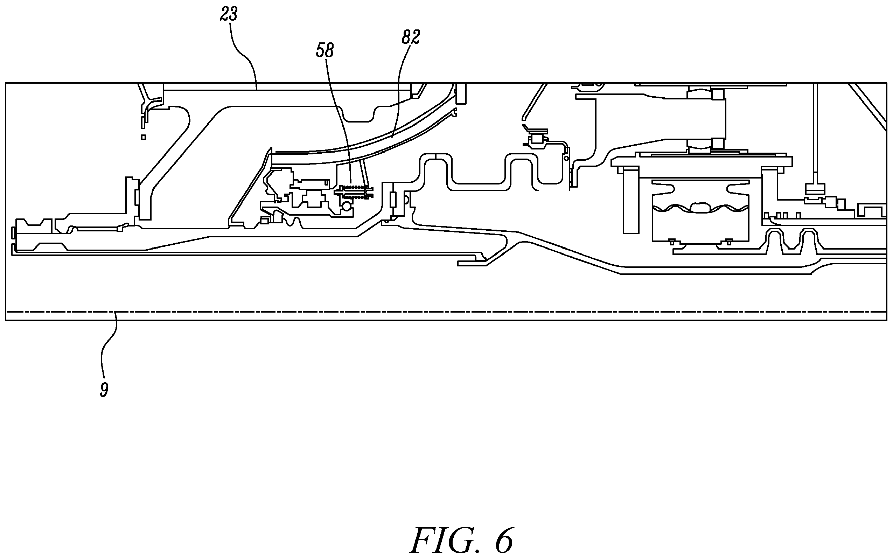

Figure 6 illustrates the same cross-section through a portion of the catcher bearing 50 of Figure 5, within a larger longitudinal portion of the gas turbine engine 10. In Figures 5 and 6 it can be seen that the catcher bearing 50 is connected to the fan 23 via shaft 42. The shaft 42 extends forwardly of the catcher bearing 50 to a connection with the fan blade assembly and rearwardly of the catcher bearing 50 to a connection with the output of the gearbox 30.

The inner race 54 of the catcher bearing 50 is connected to a roller bearing 72 for the fan shaft 42. The roller bearing 72 is of conventional type and has cylindrical roller bearing elements, i.e. to provide radial positioning for the fan shaft 42 but without limiting axial movement thereof.

The bearing 72 has inner 74 and outer 75 races/components. The inner race 74 is connected to the inner race 54 of the catcher/pre-load bearing 50. In the example shown, the inner race 54 comprises an extension portion of the inner race 74, e.g. being integral therewith. The races 74 and 54 are axially spaced by only a small distance, e.g. so as to be axially adjacent.

The outer race 75 of the roller bearing 72 is supported on the support structure 82, e.g. in series with the outer race 56 of the catcher bearing.

During engine operation, the thrust load applied by the fan 23 pulls the shaft 42 forward, which is normally resisted by the intershaft location bearing 44 (shown only in Figure 2), e.g. via thrust shaft 46. If the intershaft bearing 44 were to fail for any reason, then shaft 42 would naturally be urged forward as a result of the thrust load applied by the fan 23 not being resisted.

The catcher bearing 50 acts as a back-up fan location bearing, axially locating the fan 23, via shaft 42 and its corresponding assembly, relative to the inside of the support structure 82 in the event that the primary location bearing 44 fails.

According to the present disclosure, the spring-pack structure of the biasing member 58 applies a resilient bias against the outer race 56 of the pre-load bearing 52, which urges the pre-load bearing 52, and in turn the shaft 42, forwards relative to the support structure 82 (i.e. to the left in Figures 1, 2, 5 and 6).

A forward load is also therefore applied to location bearing 44 via shaft 42, as a result, i.e. causing a baseline or minimum tension in the shaft 42 in the force path with the location bearing 44. In this way, a catcher bearing, which would otherwise be passive in normal use, provides an additional operational benefit in ensuring adequate loading on the location bearing 44.

Upon axial displacement of the shaft 42, the previously compressed springs 66 start to extend. However, the stop members built into the spring pack structure ultimately inhibit axial movement beyond a predetermined limit, i.e. thereby isolating the springs 66 from the full axial load that could be exerted due to the thrust generated by the fan.

Depending on the degree of movement permitted and the resilience/stiffness of the springs, the springs could be extended axially from a compression state to an extension state before the axial threshold is reached. The springs could act to, in part, resist the forward axial motion of shaft 42 before stop members are engaged to inhibit further axial movement.

Although the present disclosure has been described above in relation to a spring-packed structure, in alternative embodiments, other resilient elements may be used, for example a hydraulic piston or a system of hydraulic pistons could be used to achieve the same effect.

Although the present disclosure has been described above in relation to the pre-load/catcher bearing being an extension of, i.e. integral with, the main roller bearing for the fan shaft, it is anticipated that in alternative embodiments the pre-load/catcher bearing and the main bearing could be separate bearings.

Although the present disclosure has been described in relation to specific bearing/rolling element types, it is anticipated that in alternative the bearing/rolling elements could be of a different type, such as any of angular contact rolling elements, deep groove rolling elements or tapered rolling elements. Alternatively, it is also foreseen that a hydrostatic bearing or a hydrodynamic bearing could be used instead of rolling elements.

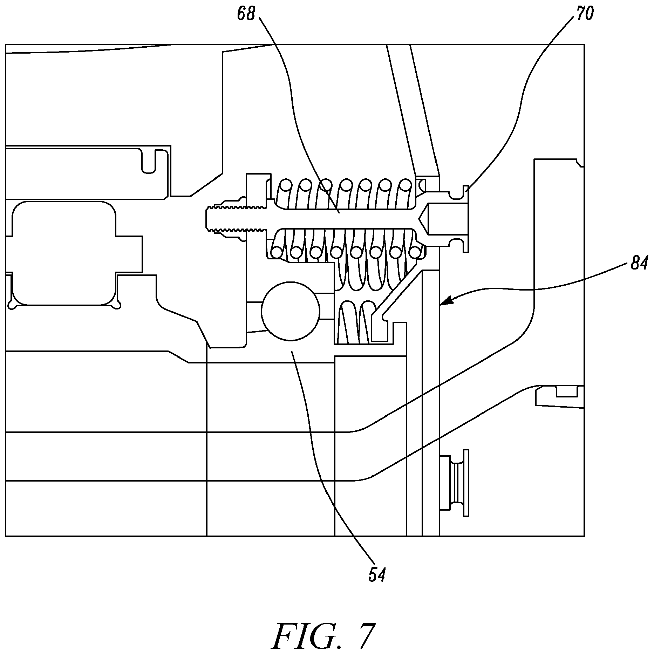

In alternative embodiments, a shock absorber, such as a snubber, may be incorporated into the catcher bearing to absorb the impact load in the eventuality that a shaft or intershaft bearing fails. In this case, the shock absorber will in turn deteriorate/deform and transfer the impact load onto the relevant race of the pre-load bearing. An example of such an arrangement is shown in Figure 7 in which the shock absorber 84 comprises two adjacent members/arms that are spaced by a short distance in the axial direction and will engage and deform due to axial movement of the inner race 54 before the end stops 70 of the alignment members 68 inhibit further axial movement.

Although the present disclosure has been described in relation to the pre-load bearing 52 being axially arrested by abutment with the bearing housing, it is also anticipated that this could instead be implemented by the pre-load pins.

Optionally, the outer race 56 may also incorporate an anti-rotation feature.

It will be appreciated that the type of spring, the number of springs, the spring rate/spring constant of those springs, and the pre-compression of the springs, may be chosen appropriately, according to the amount of pre-load/tension required during use, and therefore dependent on the amount of load applied by the fan and shaft assembly.

Furthermore, whilst the biasing mechanism is shown as applying a pre-load in compression, it is possible that the biasing mechanism could be opposingly/alternatively mounted to apply the pre-load in extension, e.g. by attaching the plate 62 to the outer bearing race 56 in Figure 5 instead of the plate 64. The plate 64 could thus be attached to the support structure 82 with the springs 66 preloaded in extension. The springs 66 in such an example would be connected to the plates at their ends.

Some of the features and embodiments described herein may provide one or more of the following advantages:
- Enablement of operation of the fan at low thrust levels, for example in descent, which improves fuel consumption.
- Lower risk of location bearing failure due to zero or no load.
- Increased product safety.
- Reduced bearing heat generation than a static-rotating catcher.
- Increased bearing predictability.
- Reduced size of catcher bearing.
- Thermomechanical movements of the shaft between the fan and the location bearing are accommodated for.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A shaft catcher system for a thrust shaft (46) comprising:
a bearing (52) comprising a first part (54) arranged to be mounted to a shaft assembly (42, 72) of a thrust shaft (46) in use and a second part (64), wherein the first part (54) is arranged to rotate with the shaft assembly (42, 72) about an axis of rotation (9) relative to the second part (64);
an annular biasing member (58) disposed about the axis of rotation (9) and arranged to apply an axial pre-load to the shaft assembly (42, 72) via the bearing (52) during normal use,
wherein the annular biasing member (58) is mounted to a static support structure (82) and arranged to limit axial movement of the shaft assembly (42, 72) during a shaft assembly failure state.

2. The shaft catcher system according to Claim 1, wherein the annular biasing member (58) comprises a biasing element (66) extending in an axial direction, the axial pre-load to the shaft assembly (42, 72) being provided by tension or compression in the biasing element (66).

3. The shaft catcher system according to Claim 2, wherein the biasing element (66) has an at-rest condition and the biasing element is held in a biased condition in normal use.

4. The shaft catcher system according to Claim 2 or Claim 3, wherein the biasing element (66) comprises a resiliently deformable element.

5. The shaft catcher system according to any one of Claims 2 to 4, wherein the annular biasing member (58) comprises a plurality of biasing elements (66) angularly spaced about the axis of rotation (9).

6. The shaft catcher system according to any one of the preceding claims, wherein the annular biasing member (58) is arranged to apply the axial pre-load to the shaft assembly (42, 72) in a first axial direction and to limit axial movement of the shaft assembly during failure in an opposing axial direction.

7. The shaft catcher system according to any one of the preceding claims, wherein the annular biasing member (58) is held in compression in normal use and/or resists axial movement of the shaft assembly during a shaft assembly failure state in tension.

8. The shaft catcher system according to any one of the preceding claims, wherein the support structure (80, 82) comprises a stop member (62; 68) to limit the axial movement of the annular biasing member (58).

9. The shaft catcher system according to Claim 8, wherein the annular biasing member is arranged to resiliently deform so as to resist axial movement of the shaft assembly during a shaft assembly failure state up to the axial extent defined by the stop member.

10. The shaft catcher system according to Claim 8, when dependent on any one of claims 2-5, wherein the stop member (68) is mounted in parallel with the biasing element.

11. The shaft catcher system according to any one of the preceding claims, wherein the bearing (52) comprises a first bearing and the shaft assembly comprises a further bearing (72) axially spaced from the first bearing.

12. The shaft catcher system according to Claim 11, wherein the further bearing (72) comprises a first race (74) mounted for rotation with the shaft relative to a second race (75), the first race being connected to the first part (54) of the first bearing (52) for rotation therewith.

13. The shaft catcher system according to Claim 11 or Claim 12, wherein the further bearing comprises roller elements.

14. A gas turbine engine (10) for an aircraft comprising: an engine core (11) comprising a turbine (19), a compressor (14), and a core shaft (26) connecting the turbine to the compressor; a fan (23) located upstream of the engine core, the fan comprising a plurality of fan blades; a gearbox (30) that receives an input from the core shaft (26) and outputs drive to the fan so as to drive the fan at a lower rotational speed than the core shaft; and a shaft catcher system according to any one of Claims 1 to 14.

15. The gas turbine engine (10) according to Claim 14, wherein the shaft catcher system bears a fan shaft between the gearbox (30) and the fan blades.
